# EUROPÄISCHE PATENTSCHRIFT

(11) **EP 1 147 038 B1**
(45) Veröffentlichungstag und Bekanntmachung des Hinweises auf die Patenterteilung: **09.11.2005**
(21) Anmeldenummer: 00979417.3
(22) Anmeldetag: 12.10.2000
(51) Int. Cl.: B60S 1/24

(54) **WISCHERGESTÄNGE EINER SCHEIBENWISCHANLAGE FÜR FAHRZEUGE UND VERFAHREN ZU DESSEN HERSTELLUNG**
ROD ASSEMBLY OF WINDSCREEN WIPERS, SAID ASSEMBLY PERTAINING TO A WINDSCREEN WIPER SYSTEM FOR VEHICLES AND A METHOD FOR PRODUCING SAME
TRINGLERIE DE SYSTEME D'ESSUIE-GLACE POUR VEHICULES, ET PROCEDE DE REALISATION D'UN ELEMENT D'ACCOUPLEMENT D'UNE TRINGLERIE D'ESSUIE-GLACE

(30) Priorität: 20.10.1999 DE 19950488
(43) Veröffentlichungstag der Anmeldung: 24.10.2001
(73) Patentinhaber: ROBERT BOSCH GMBH, 70442 Stuttgart (DE)
(72) Erfinder: ZIMMER, Joachim, 77880 Sasbach (DE)
(86) Internationale Anmeldenummer: PCT/DE2000/003584
(87) Internationale Veröffentlichungsnummer: WO 2001/028825

(56) Entgegenhaltungen:
- EP-A- 0 316 832
- DE-A- 4 444 066

## Beschreibung

### stand der Technik

Die Erfindung betrifft ein Wischergestänge einer Scheibenwischanlage für Fahrzeuge gemäß Oberbegriff des Anspruchs 1 und ein Verfahren zur Herstellung eines Koppelelements eines Wischergestänges einer Scheibenwischanlage für Fahrzeuge nach Anspruch 11.

Wischergestänge der hier angesprochenen Art sind bekannt. Sie dienen zur Verlagerung eines ein Wischelement aufweisenden Wischarms, der an eine Scheibe eines Fahrzeugs anlegbar ist. Das von einer dreieckförmigen, einstückigen Platte gebildete Koppelelement dient zur Übertragung beziehungsweise Übersetzung von Kräften und Momenten auf Antriebs- oder Abtriebswellen des Wischergestänges und wird beispielsweise bei Wischergetrieben mit Kreuzlenkern oder Reihenantrieben sowie für Umlenklager bei Gegenlaufwischeranlagen eingesetzt. Das Koppelelement weist mehrere Verbindungsstellen auf, an denen beispielsweise Gelenkstangen, Motorkurbeln, Schwingen oder dergleichen anbringbar sind. Zur schwenkbeweglichen Lagerung ist das Koppelelement mit einer Antriebswelle drehfest gekoppelt. Die Verbindungsstellen sind in einem fixen Abstand zur Drehachse der Antriebswelle angeordnet. Das bekannte Koppelelement weist Kröpfungen auf, so dass für dessen Herstellung aufwendige und somit teuere Werkzeuge erforderlich sind, die nur für eine Ausführungsform des Koppelelements verwendet werden können. Bei der Herstellung eines größeren oder kleineren Koppelelements mit anderen Abständen zwischen den Verbindungsstellen zueinander und/oder zur Drehachse der Antriebswelle , müssen andere Spezialwerkzeuge eingesetzt werden. Die Kosten für das Koppelelement sind daher sehr hoch.

Aus der DE-A-4 444 066 geht ein Wischergestänge der eingangs genannten Art hervor, das ein Koppelelement mit zwei in einem Abstand voneinander angeordneten Verbindungsstellen besitzt. Das Koppelelement ist als einstückiges, V-förmiges Bauteil ausgebildet, wobei die Winkelstellung der Arme des V's je nach Anwendungsfall unterschiedlich ist und dementsprechende Koppelelemente eingesetzt werden müssen.

### Vorteile der Erfindung

Das erfindungsgemäße Wischergestänge mit den kennzeichnenden Merkmalen des Anspruchs 1 hat demgegenüber den Vorteil, dass unterschiedliche Ausführungsformen des Koppelelements mit einem oder mehreren einfachen und gegebenenfalls verstellbaren Werkzeugen hergestellt werden können. Das heißt, das beziehungsweise die Werkzeuge sind mehrfach verwendbar, so dass die Werkzeugkosten und somit die Herstellungskosten des Koppelelements nur gering sind. Das Wischergestänge zeichnet sich dadurch aus, dass das Koppelelement mehrteilig ausgebildet ist und zumindest ein erstes Koppelteil und ein zweites Koppelteil aufweist, an denen jeweils mindestens eine der Verbindungsstellen vorgesehen ist, wobei zum Einstellen eines gewünschten Abstands der Verbindungsstellen beim oder vor dem Verbinden der Koppelelemente ihre Ausrichtung zueinander erfolgt. Die Koppelteile, die erst nach ihrer Herstellung miteinander verbunden werden, können relativ grobe Toleranzen aufweisen, da beim beziehungsweise vor dem Verbinden der beiden Koppelelemente miteinander diese noch so zueinander ausgerichtet werden können, dass deren Verbindungsstellen in einem gewünschten Abstand zueinander angeordnet sind. Dadurch, dass eine Ausrichtung der Koppelteile zueinander möglich ist, kann die Kinematik des Wischergestänges variiert werden, wobei für die einwandfreie Funktion der Kinematik auch kleine Abstanztoleranzen zwischen den Verbindungsstellen der Koppelteile herstellbar sind. Dadurch können auch an die kinematische Übertragungsgüte gestellten hohen Qualitätsanforderungen erfüllt werden.

In bevorzugter Ausführungsform weisen die ersten und zweiten Koppelteile jeweils mindestens eine Durchgangsöffnung auf, in die eine schwenkbare Achse einsteckbar ist. Die Achse, die die Durchgangsöffnungen durchgreift oder zumindest eine der Durchgangsöffnungen durchgreift und in die andere eingreift, ist gemäß einer ersten Ausführungsvariante kraftschlüssig, stoffschlüssig und/oder formschlüssig mit den ersten und zweiten Koppelteilen verbindbar. Die Achse kann beispielsweise mit einem Drehmoment beaufschlagt werden, wodurch sie quasi zu einer Antriebswelle wird. Dadurch kann dann aufgrund der drehfesten Kopplung der ersten Achse mit den Koppelteilen Kräfte und Momente auf die an den Verbindungsstellen der Koppelteile angebrachten Übertragungsglieder übertragen werden. Selbstverständlich ist auch der umgekehrte Fall möglich, nämlich dass wenigstens eines der Übertragungsglieder angetrieben ist, so dass über mindestens eines der Koppelteile ein Drehmoment auf die Achse aufgebracht wird. Bei einer anderen Ausführungsvariante dient die Achse lediglich zur drehbeweglichen Lagerung der hier fest miteinander verbundenen Koppelteile, das bedeutet, dass der Durchmesser der Durchgangsöffnungen größer ist als der der Achse. Es besteht also ein radiales Spiel zwischen Achse und Durchgangsöffnungen, so dass die Koppelteile, vorzugsweise frei beweglich, um die Längsmittelachse der Achse schwenkbar, gegebenenfalls auch rotierbar sind.

Schließlich ist bei einem weiteren Ausführungsbeispiel des Wischergestänges vorgesehen, dass die Koppelteile drehfest mit einer in deren jeweiligen Durchgangsöffnung eingesteckten Hülse verbunden sind, wobei die Hülse auf die Achse aufsteckbar ausgebildet ist. Die Koppelteile können also mit Hilfe der Hülse in einem ersten Schritt zu einer montierbaren Baueinheit miteinander und mit der Hülse verbunden werden, wobei während des Zusammenbaus die Ausrichtung der Koppelteile beziehungsweise deren Verbindungsstellen zueinander erfolgt. Die so zusammengefügten Koppelteile können dann durch Aufstecken der Hülse auf die Achse mit dieser gekoppelt werden.

Es ist möglich, die Hülse drehfest mit der Achse zu verbinden, so dass ein Drehmoment von der Achse auf das Koppelelement beziehungsweise vom Koppelelement auf die Achse übertragen werden kann. Hierzu kann die Hülse beispielsweise auf die Achse aufgepresst werden. Alternativ kann die Hülse auch stoffschlüssig, beispielsweise durch schweißen oder löten, mit der Hülse verbunden werden. Eine drehfeste Verbindung kann überdies durch Formschluss erfolgen, wie zum Beispiel bei einer Wellen-Naben-Verbindung. Bei einem anderen Ausführungsbeispiel ist der Innendurchmesser der Hülse größer als der Außendurchmesser des in die Hülse eingreifenden beziehungsweise die Hülse durchgreifenden Längsabschnitts der Achse, so dass das Koppelelement frei beweglich um die Längsmittelachse der beispielsweise feststehend angeordneten Achse schwenkbar ist.

Weitere vorteilhafte Ausführungsformen des Wischergestänges ergeben sich aus den übrigen-Unteransprüchen.
Es wird ferner ein Verfahren zur Herstellung eines Koppelelements eines Wischergestänges einer Scheibenwischanlage für Fahrzeuge mit den Merkmalen des Anspruchs 11 vorgeschlagen. Das Koppelelement besteht aus mindestens zwei Koppelteilen, die jeweils mindestens eine Verbindungsstelle aufweisen, an denen mindestens ein Übertragungsglied des Wischergestänges, beispielsweise eine Gelenkstange, Schwinge oder dergleichen, anbringbar ist. Außerdem sind die Koppelteile mit jeweils mindestens einer Durchgangsöffnung versehen, in die eine Antriebswelle einsteckbar ist. Im Zusammenhang mit der hier vorliegenden Erfindung bezieht sich der Begriff "einsteckbar" auf die Anordnung der Antriebswelle nach dem Zusammenführen mit den Koppelteilen, das heißt, dass die Antriebswelle in die Durchgangsöffnungen eingreift oder diese durchgreift. Es ist vorgesehen, dass die Antriebswelle zunächst in die Durchgangsöffnungen der Koppelteile eingebracht wird. Es kann nun durch Verschwenken der Koppelteile um die Längsmittelachse der Antriebswelle eine exakte Ausrichtung der Koppelteile zueinander vorgenommen werden, so dass die an den Koppelteilen vorgesehene Verbindungsstellen in einem gewünschten Abstand zueinander angeordnet sind. Anschließend werden die Koppelteile und die Antriebswelle drehfest, vorzugsweise lösbar, miteinander gekoppelt. Dadurch, dass der Abstand der Verbindungsstellen der Koppelteile variierbar ist, können die Koppelteile beispielsweise für unterschiedliche Wischergestänge verwendet oder die Kinematik eines bestehenden Wischergestänges verändert werden. Aufgrund der Verwendung der Koppelteile für unterschiedliche Ausführungsformen des Wischergestänges sind die Herstellungskosten des Koppelelements nur relativ gering Aufgrund seiner mehrteiligen Ausgestaltung eignet sich das Koppelelement auch für die Serienproduktion.

Weitere Ausführungsformen des Verfahrens ergeben sich aus den übrigen Unteransprüchen.

### Zeichnung

Im folgenden wird die Erfindung anhand der Zeichnung näher erläutert. Dabei zeigen:
- Figuren 1A und 1B: jeweils eine perspektivische Darstellung eines ersten Ausführungsbeispiels eines mehrteiligen Koppelelements;
- Figur 2: eine perspektivische Darstellung eines aus dem Stand der Technik bekannten, einstückig ausgebildeten Koppelelements;
- Figur 3: einen Ausschnitt eines weiteren Ausführungsbeispiels des drehfest mit einer Achse verbundenen Koppelelements;
- Figur 4: einen Ausschnitt eines weiteren Ausführungsbeispiels des Koppelelements in seinem Verbindungsbereich mit der Achse;
- Figur 5: eine Seitenansicht eines weiteren Ausführungsbeispiels des Koppelelements, teilweise im Schnitt,
- Figur 6: eine perspektivische Darstellung eines Kreuzlenkers eines Wischergestänges und
- Figur 7: eine perspektivische Darstellung einer weiteren Ausführungsvariante des in den Figuren 1A, 1B dargestellten Koppelelements.

### Beschreibung der Ausführungsbeispiele

Das im folgenden beschriebene Koppelelement 1 ist allgemein im Zusammenhang mit einem Wischergestänge einer Scheibenwischanlage für Fahrzeuge, wie zum Beispiel Kraftfahrzeuge, Schienen- oder Wasserfahrzeuge, einsetzbar. Im folgenden wird rein beispielhaft davon ausgegangen, dass es sich hier um ein Koppelelement für ein Wischergestänge einer Scheibenwischanlage eines Kraftfahrzeugs handelt.

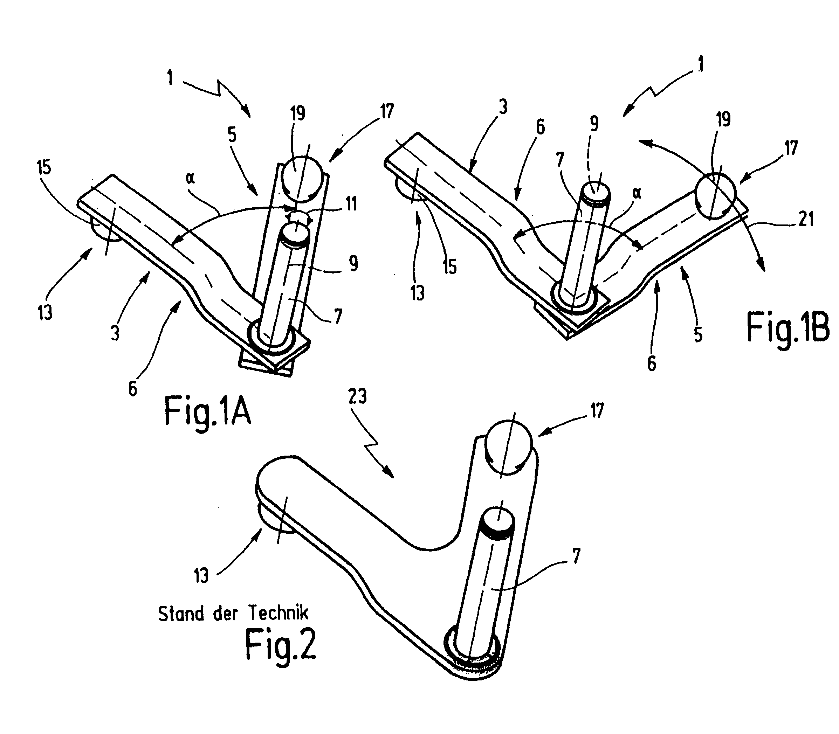

Figur 1A zeigt eine perspektivische Darstellung eines Ausführungsbeispiels des Koppelelements 1 des in Figur 1 nicht näher dargestellten Wischergestänges, das ein erstes Koppelteil 3 und ein zweites Koppelteil 5 aufweist, die einen länglichen Grundkörper mit rechteckförmigem Querschnitt besitzen. Die Koppelteile 3, 5 weisen jeweils eine Kröpfung 6 auf, die in etwa in der Mitte der Koppelteile vorgesehen ist, wobei aufgrund der Darstellung gemäß Figur 1A lediglich die Kröpfung 6 des ersten Koppelteils 3 erkennbar ist.

Die Koppelteile 3, 5 weisen an ihrem einen Ende jeweils eine in Figur 1A nicht erkennbare Durchgangsöffnung auf, in die eine Achse 7 eingreift beziehungsweise durchgreift. Die Koppelteile 3, 5 sind in geeigneter Weise drehfest mit der Achse 7 verbunden, so dass bei einer Beaufschlagung der Achse 7 mit einem Drehmoment die Koppelteile 3, 5 um eine Längsmittelachse 9 der Achse 7 gemeinsam verschwenkt werden, wie mit einem Doppelpfeil 11 angedeutet. Die Koppelteile 3, 5 sind übereinander angeordnet und liegen in ihrem die Durchgangsöffnung aufweisenden Endbereich aneinander an. Die Anordnung der Koppelteile 3, 5 ist hier so gewählt, dass das Koppelelement 5 eine V-Form aufweist. Eine Relativbewegung zwischen den Koppelteilen 3, 5 ist aufgrund ihrer jeweiligen drehfesten Verbindung mit der Achse 7 und gegebenenfalls durch eine zusätzliche Verbindung der Koppelteile miteinander verhindert.

Das erste Koppelteil 3 weist an seinem der Durchgangsöffnung gegenüberliegenden Ende eine erste Verbindungsstelle 13 auf, an der mindestens ein nicht dargestelltes Übertragungsglied des Wischergestänges, wie zum Beispiel eine Gelenkstange, anbringbar ist.. Die erste Verbindungsstelle 13 weist bei diesem Ausführungsbeispiel einen auf der Unterseite des ersten Koppelteils 3 angebrachten Kugelkopf 15 auf, mit dessen Hilfe eine gelenkige Verbindung zwischen dem ersten Koppelteil 3 und einem entsprechend ausgebildeten Übertragungsglied realisierbar ist. Das zweite Koppelteil 5 weist an seinem der Durchgangsöffnung gegenüberliegenden Ende eine zweite Verbindungsstelle 17 auf, in die ein weiteres Übertragungsglied (nicht dargestellt) des Wischergestänges, wie zum Beispiel eine Schwinge, eine Motorkurbel oder dergleichen anbringbar ist. Auch die zweite Verbindungsstelle 17 weist einen Kugelkopf 19 zur Ausbildung einer Gelenkverbindung zwischen dem Koppelelement 1 und dem Übertragungsglied auf, wobei der Kugelkopf 19 auf der Oberseite des zweiten Koppelteils 5 befestigt ist. Die Kugelköpfe 15, 19 sind also auf voneinander abgewandten Seiten der Koppelteile 3, 5 angeordnet. Der Abstand der Verbindungsstellen 13, 17 zur Längsmittelachse 9 bleibt bei diesem Ausführungsbeispiel auch bei einem Verschwenken des Koppelelements 1 konstant.

Aufgrund des Abstandes, den die ersten und zweiten Verbindungsstellen 13, 17 zueinander aufweisen, ergibt sich für das Wischergestänge eine bestimmte Kinematik. Um die Kinematik des Wischergestänges zu verändern, muss nicht zwingend ein anderes Koppelelement verwendet werden, da eine Veränderung der Lage der ersten und zweiten Verbindungsstellen 13, 17 zueinander dadurch realisiert werden kann, dass der Koppelwinkel α zwischen den ersten und zweiten Koppelteilen 3, 5 auf einen gewünschten Wert eingestellt werden kann, bevor die Koppelteil 3, 5 drehfest mit der Achse 7 verbunden werden.

Figur 1B zeigt das Koppelelement 1 gemäß Figur 1A, bei dem die ersten und zweiten Koppelteile 3, 5 weiter auseinander stehen, das heißt, der Koppelwinkel α zwischen den Koppelteilen 3, 5 ist größer als bei dem in Figur 1 dargestellten Ausführungsbeispiel. Dadurch ist auch der Abstand zwischen den Verbindungsstellen 13, 17 vergrößert, der in einfacher Weise dadurch variierbar ist, dass beispielsweise das zweite Koppelteil 5 gegenüber dem ersten Koppelteil 3 um die Längsmittelachse 9 verschwenkt wird, wie mit einem Doppelpfeil 21 angedeutet, bevor die drehfeste Verbindung hergestellt wird. Hierbei kann das erste Koppelteil 3 bereits mit der Achse 7 drehfest verbunden sein. Zur Einstellung des Abstands zwischen den Verbindungsstellen 13, 17 kann selbstverständlich auch das erste Koppelteil 3 um die Längsmittelachse 9 relativ gegenüber dem zweiten Koppelteil 5 verschwenkt werden, das gegebenenfalls bereits drehfest mit der Achse 7 verbunden ist.

Es wird deutlich, dass aufgrund der mehrteiligen Ausgestaltung des Koppelelements 1 der Koppelwinkel α zwischen den beiden Koppelteilen 3, 5 variierbar ist und präzise eingestellt werden kann. Dies ermöglicht die Verwendung des ersten Koppelteils 3 und/oder des zweiten Koppelteils 5 für verschiedene Ausführungsformen des Koppelelements 1 beziehungsweise des Wischergestänges. Trotz der Verwendung gleicher Koppelteile für verschiedene Ausführungsformen des Koppelelements 1 sind die Einschränkungen bei der Auslegung der Kinematik des jeweiligen Wischergestänges nur gering.

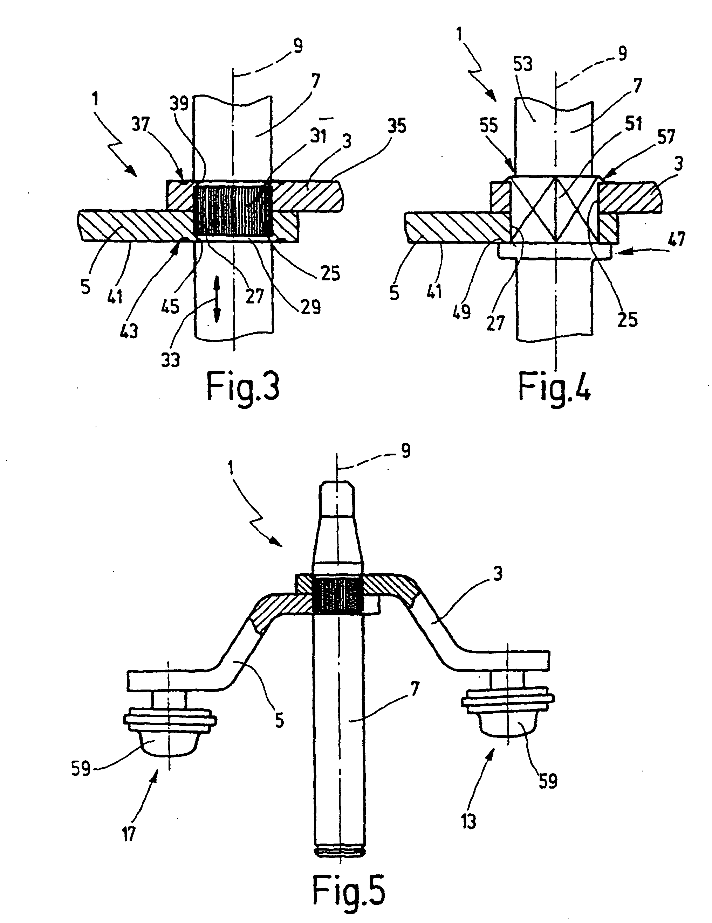

Figur 2 zeigt ein bekanntes, eingangs beschriebenes Koppelelement 23, das von einer einstückigen, dreieckförmigen Platte gebildet ist. Das Koppelelement 23 weist ebenfalls erste und zweite Verbindungsstellen 13 und 17 auf und ist drehfest mit einer Achse 7 gekoppelt, die als Antriebswelle dienen kann. Da aufgrund der unbeweglichen, die Verbindungsstellen 13, 17 aufweisenden Schenkel der Abstand zwischen den Verbindungsstellen 13, 17 nicht veränderbar ist, ist bei dem bekannten Koppelelement 23 keine Änderung der Kinematik des Wischergestänges möglich. Das Koppelelement 23 kann also nur für eine Ausführungsform des Wischergestänges verwendet werden. Da für jede Ausführungsform des Koppelelements 23 ein spezielles Werkzeug erforderlich ist, sind die Kosten entsprechend hoch.

Figur 3 zeigt eine Schnittansicht eines Ausführungsbeispiels des Koppelelements 1, das drehfest mit einer Achse 7 verbunden ist. Das erste Koppelteil 3 weist eine erste Durchgangsöffnung 25 und das zweite Koppelteil 5 eine zweite Durchgangsöffnung 27 auf, in die die Achse 7 eingesteckt ist.

Der in den Durchgangsöffnungen 25, 27 angeordnete Längsabschnitt 29 der Achse 7 ist mit einer Rändelung 31 versehen. Der Durchmesser der Achse 7 im Bereich der Rändelung 31 ist größer als der Durchmesser der Durchgangsöffnungen 25, 27, das heißt, die Koppelteile 3, 5 sind auf die Achse 7 aufgepresst, wodurch eine kraftschlüssige Verbindung zwischen den Koppelteilen 3, 5 und der Achse 7 gebildet ist. Die drehfeste Verbindung zwischen Koppelteilen 3, 5 und Achse 7 erfolgt vorzugsweise erst dann, nachdem der Koppelwinkel α zwischen den Koppelteilen 3, 5 (siehe Figur 1B) eingestellt ist. Denkbar ist auch, dass auch nach der Herstellung der kraftschlüssigen Verbindung eine Verstellung des Koppelwinkels α durch eine Relativbewegung zwischen den Koppelteilen 3, 5 möglich ist, wozu entsprechend große Kräfte auf zumindest eines der Koppelteile 3, 5 aufgebracht werden müssen.

Um eine Relativverschiebung der Koppelteile 3, 5 gegenüber der Achse 7 in axialer Richtung (Doppelpfeil 33) zu verhindern, ist bei diesem Ausführungsbeispiel auf der Oberseite 35 des ersten Koppelteils 3 eine die Durchgangsöffnung 25 umgebende Ringverstemmung 37 eingebracht, wodurch das Material des ersten Koppelteils 3 in eine umlaufende erste Ringnut 39 in der Achse 7 verdrängt wird. Hierdurch wird ein Hintergriff gebildet, der das erste Koppelteil 3 gegen eine Axialverschiebung sichert. Darüber hinaus wird in die Unterseite 41 des zweiten Koppelteils 5 eine weitere, die Durchgangsöffnung 27 umgebende Ringverstemmung 43 eingebracht, wodurch Material des zweiten Koppelteils 5 in eine in der Außenmantelseite der Achse 7 angeordnete zweite Ringnut 45 gedrängt wird, so dass auch das zweite Koppelteil 5 axial gesichert ist.

Als Alternative zu den Ringverstemmungen 37, 43 können in die Koppelteile 3, 5 an entsprechender Stelle auch jeweils eine oder mehrere kleinere, die Achse 7 nur teilweise umgebende Verstemmungen eingebracht werden, um einen Hintergriff des Koppelteilmaterials mit der jeweiligen Ringnut zu realisieren.

Sofern die ersten und zweiten Koppelteile 3, 5 in axialer Richtung nur mit relativ kleinen Kräften beaufschlagt werden, kann die axiale Sicherung der Koppelteile 3, 5 über die Klemmung, das heißt die Kraftschlussverbindung zwischen Rändelung 31 und den Durchgangsöffnungen 25, 27 ausreichen, so dass keine Verstemmungen in die Koppelteile eingebracht werden müssen.

Figur 4 zeigt ein weiteres Ausführungsbeispiel des mehrteiligen Koppelelements 1, das drehfest mit einer Achse 7 gekoppelt ist. Gleiche Teile sind mit gleichen Bezugszeichen versehen, so dass insofern auf die Beschreibung zu den vorangegangenen Figuren verwiesen wird. Die Achse 7 weist eine durch einen durchmessergrößeren Querschnitt 47 gebildete Ringschulter 49 und einen sich daran anschließenden Vielkant 51 auf. Der Außendurchmesser der Achse 7 im Bereich des Vielkants 51 ist größer als der Durchmesser der Achse 7 im Bereich eines sich an den Vielkant 51 anschließenden Längsabschnitt 53, wodurch ein Ringbund 55 gebildet ist. Bei diesem Ausführungsbeispiel weisen die Durchgangsöffnungen 25, 27 in den Koppelteilen 3, 5 eine zur Ausbildung einer Formschlussverbindung entsprechend angepasste Form auf. Ist der Vielkant beispielsweise ein Sechskant, so weisen die Durchgangsöffnungen 25, 27 vorzugsweise einen entsprechend sechseckigen Querschnitt auf. Bei diesem Ausführungsbeispiel sind die Variationsmöglichkeiten des Koppelwinkels α (Figur 1B) zwischen den Koppelteilen 3, 5 nur gering.

Eine axiale Sicherung des Koppelelements 1 wird dadurch realisiert, dass das zweite Koppelteil 5 mit seiner Unterseite 41 an der Ringschulter 49 anliegt, während in die Oberseite des ersten Koppelteils 3, das mit seiner Unterseite auf der Oberseite des zweiten Koppelteils 5 anliegt, eine im Bereich des Ringbunds 55 angeordnete Prägung 57 eingebracht ist, wodurch das Achsenmaterial im Bereich des Vielkants 51 bis über den Rand der Durchgangsöffnung 25 gedrängt wird.

Um bei der in Figur 4 dargestellten Ausführungsvariante einer drehfesten Verbindung zwischen Koppelteilen 3, 5 und Achse 7 mit Hilfe des Vielkants 51 die der Einsteckmöglichkeiten der Durchgangsöffnungen in die Achse, also die Anzahl der realisierbaren Koppelwinkel a zwischen den Koppelteilen 3, 5 zu erhöhen, so dass Koppelwinkel α auch in sehr kleinen Bereichen variiert werden kann, können die Durchgangsöffnungen 25, 27 eine feine Verzahnung aufweisen, wobei die Kopplungswinkelverstellung durch die Anzahl der Zähne bestimmt wird. Die Anordnung der Koppelteile 3, 5 ist dann also in einem relativ großen Rastermaß veränderbar.

Figur 5 zeigt ein weiteres Ausführungsbeispiel des Koppelelements 1 in Seitenansicht, das mit Hilfe der anhand der Figur 3 beschriebenen Kraftschlussverbindung drehfest mit der Achse 7 verbunden ist. Beide Koppelteile 3, 5 sind hier stark gekröpft und weisen auf ihrer Unterseite jeweils einen Formzapfen 59 auf, mit dessen Hilfe jeweils eine Gelenkverbindung zwischen dem Koppelelement 1 und nicht dargestellten Übertragungsgliedern des Wischergestänges herstellbar ist.

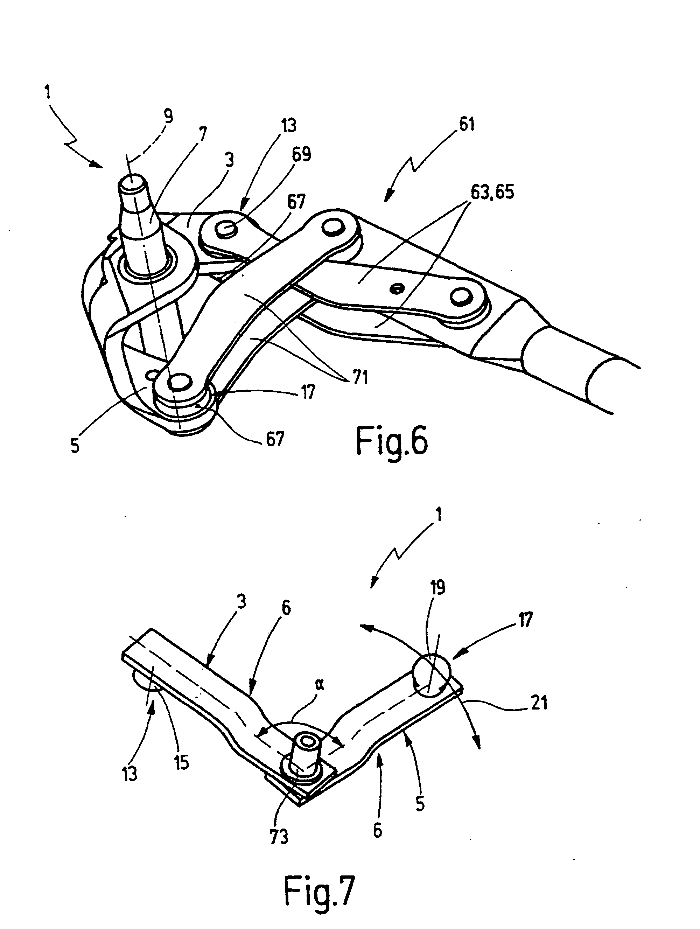

Figur 6 zeigt eine perspektivische Darstellung eines Kreuzlenkers 61, der ein aus zwei Koppelteilen 3, 5 bestehendes Koppelelement 1 umfasst, wobei die Koppelteile drehfest mit einer Achse 7 verbunden sind. Das erste Koppelteil 3 weist eine Verbindungsstelle 13 auf, an der ein hier von jeweils einem Hebel 63 gebildetes Übertragungsglied 65 im wesentlichen parallel zur Längsmittelachse 9 der Achse 7 schwenkbar angebracht ist. Die erste Verbindungsstelle 13 weist hier eine nicht näher dargestellte Durchgangsöffnung auf, in der eine Kunststoffbuchse 67 angeordnet, vorzugsweise eingespritzt, ist, in die ein die Übertragsglieder 65 und das erste Koppelteil 3 miteinander verbindender Zapfen 69 eingesteckt ist. Das zweite Koppelteil 5 weist ebenfalls eine Verbindungsstelle 17 mit einer mit einer Kunststoffbuchse 67 versehenen Durchgangsöffnung auf. An der Verbindungsstelle 17 sind von Hebel gebildete Übertragungsglieder 71 schwenkbeweglich angebracht. Auch bei diesem Ausführungsbeispiel des Koppelelements 1 ist der Koppelwinkel α zwischen den ersten und zweiten Koppelteilen 3, 5 variierbar, so dass die Kinematik des Wischergestänges ohne weiteres in gewünschter Weise verändert werden kann.

Figur 7 zeigt ein weitere Ausführungsform des Koppelelements 1, das sich von dem anhand der Figuren 1A und 1B erläuterten Ausführungsbeispiel lediglich dadurch unterscheidet, dass die ersten und zweiten Koppelteile 3, 5 drehfest mit einer Hülse 73 verbunden sind, die beispielsweise in die Durchgangsöffnungen der Koppelteile 3, 5 eingepresst ist. Ferner ist denkbar, dass die Hülse 73 stoffschlüssig, beispielsweise durch schweißen, löten oder kleben, und/oder formschlüssig mit den Koppelteilen 3, 5 verbunden ist. Unabhängig von der Verbindungsart zwischen Hülse und Koppelteilen, kann der Koppelwinkel α zwischen den Koppelteilen 3, 5 exakte eingestellt werden, bevor und -wenn es die Verbindung zulässt, wie zum Beispiel eine Kraftschluss-/Reibschlussverbindung- gegebenenfalls auch nachdem die Koppelteile mit der Hülse 73 verbunden sind.

Nach einer ersten Ausführungsvariante ist die Hülse 73 mit den daran befestigten Koppelteilen 3, 5 auf eine mit einem Antriebs- oder Bremsmoment beaufschlagbare Antriebswelle (nicht dargestellt) aufsteckbar, wobei die Innenkontur der Hülse 73 und die Außenkontur der Antriebswelle derart aneinander angepasst sind, dass beim Zusammenfügen eine drehfeste Verbindung zwischen diesen Teilen erfolgt. Selbstverständlich ist es auch möglich, die Hülse 73 und die Antriebswelle kraftschlüssig und/oder formschlüssig miteinander zu verbinden. Bei einer anderen Ausführungsform des Koppelelements 1 ist vorgesehen, dass die Hülse 73 auf eine -in Figur 7 nicht dargestellte- beispielsweise feststehend angeordnete Achse aufgesteckt wird, die der drehbeweglichen Lagerung der Hülse 73 beziehungsweise des Koppelelements 1 dient. Hierzu weist die Hülse 73 einen Innendurchmesser auf, der größer ist als der Außendurchmesser des in die Hülse 73 einsteckten Längsabschnitts der Achse. Bei dieser Verbindungsart können keine Antriebsmomente von der Achse auf das Koppelelement oder vom Koppelelement auf die Achse übertragen werden.

Allen Ausführungsbeispielen des Koppelelements 1 ist gemeinsam, dass dessen Einzelteile vorzugsweise mit einem verstellbaren Universalwerkzeug herstellbar sind, so dass ohne weiteres unterschiedliche Ausführungsformen des Koppelelements 1 mit demselben beziehungsweise denselben Werkzeugen angefertigt werden können. Die Koppelteile 3, 5 können beispielsweise aus Bandmaterial hergestellt werden, so dass praktisch kein Abfall anfällt. Die mehrteilige Ausgestaltung des Koppelelements 1 ermöglicht ferner eine kompakte Bauweise, wobei die Herstellungstoleranzen der Koppelteile 3, 5 relativ grob sein können, da der Koppelwinkel α des Koppelelements 1 erst bei der Montage der Koppelteile 3, 5 eingestellt wird. Bei einer für Kreuzlenker eingesetzten Ausführungsform des Koppelelements 1, wie sie beispielsweise in Figur 6 dargestellt ist, kann das Zusammenfügen der Koppelteile 3, 5, also deren drehfeste Verbindung mit der Achse 7, ebenfalls mit großen Toleranzen erfolgen, da mit Hilfe der Kunststoffbuchsen 67, die vorzugsweise an die jeweilige Verbindungsstelle 13, 17 angespritzt werden, eine für eine einwandfreie Funktion der Kinematik des Wischergestänges erforderliche kleine Toleranz hergestellt werden kann.

## Patentansprüche

1. Wischergestänge einer Scheibenwischanlage für Fahrzeuge, wobei das Wischergestänge mindestens ein Koppelelement (1) aufweist, das mindestens zwei in einem Abstand voneinander angeordnete Verbindungsstellen (13, 17) besitzt, an denen jeweils mindestens ein Übertragungsglied (63, 65; 71) des Wischergestänges anbringbar ist, und wobei das Koppelelement (1) um die Längsmittelachse (9) einer Achse (7) schwenkar ist, **dadurch gekennzeichnet, dass** das Koppelelement (1) mehrteilig ausgebildet ist und zumindest ein erstes Koppelteil (3) und ein zweites Koppelteil (5) aufweist, an denen jeweils mindestens eine der Verbindungsstellen (13; 17) vorgesehen ist, wobei zum Einstellen eines gewünschten Abstands der Verbindungsstellen (13;17) beim oder vor dem Verbinden der Koppelteile (3,5) ihre Ausrichtung zueinander erfolgt.

2. Wischergestänge nach Anspruch 1, **dadurch gekennzeichnet, dass** die ersten und zweiten Koppelteile (3,5) jeweils mindestens eine Durchgangsöffnung (25,27) aufweisen, in die die Achse (7) einsteckbar ist.

3. Wischergestänge nach einem der vorhergehenden Ansprüche, **dadurch gekennzeichnet, dass** die Koppelteile (3,5) übereinander angeordnet sind und zumindest bereichsweise aneinander anliegen.

4. Wischergestänge nach einem der vorhergehenden Ansprüche, **dadurch gekennzeichnet, dass** die ersten und zweiten Koppelteile (3,5) und die Achse (7) kraftschlüssig, stoffschlüssig und/oder formschlüssig miteinander koppelbar sind.

5. Wischergestänge nach einem der vorhergehenden Ansprüche, **dadurch gekennzeichnet, dass** die Achse (7) mit einem Drehmoment beaufschlagbar ist.

6. Wischergestänge nach einem der vorhergehenden Ansprüche, **dadurch gekennzeichnet, dass** der in den Durchgangsöffnungen (25,27) der Koppelteile (3,5) angeordnete Längsabschnitt (29) der Achse (7) mit einer Rändelung (31) versehen ist, wobei der Durchmesser der Durchgangsöffnungen (25,27) kleiner ist als der Durchmesser der Achse (7) im Bereich der Rändelung (31).

7. Wischergestänge nach einem der vorhergehenden Ansprüche, **dadurch gekennzeichnet, dass** die Koppelteile (3,5) auf der Achse (7) gegen eine Verschieben in axialer Richtung mittels jeweils mindestens einer Verstemmung, vorzugsweise einer die jeweilige Durchgangsöffnung umgebende Ringverstemmung (37,43), gesichert sind.

8. Wischergestänge nach einem der vorhergehenden Ansprüche, **dadurch gekennzeichnet, dass** die Achse (7) mit einem Vielkant (51) versehen ist, der in die zur Ausbildung einer Formschlusses entsprechend angepassten Durchgangsöffnungen (25,27) einsteckbar ist.

9. Wischergestänge nach Anspruch 8, **dadurch gekennzeichnet, dass** die Achse (7) zur axialen Sicherung der Koppelteile (3,5) eine Ringschulter (49) aufweist, an der das erste Koppelteil (3) anliegt, wobei das an dem ersten Koppelteil (3) anliegende zweite Koppelteil (5) auf seiner dem ersten Koppelteil (3) abgewandten Seite mit einer Verstemmung versehen ist.

10. Wischergestänge nach einem der vorhergehenden Ansprüche, **dadurch gekennzeichnet, dass** die Koppelteile drehfest mit einer in deren jeweiligen Durchgangsöffnung eingesteckten Hülse (73) verbunden sind, wobei die Hülse (73) auf die Achse aufsteckbar ausgebildet ist.

11. Verfahren zur Herstellung eines Koppelelements eines Wischergestänges einer Scheibenwischanlage für Fahrzeuge, wobei das Koppelelement mindestens zwei Koppelteile mit jeweils mindestens einer Verbindungsstelle, an die mindestens ein Übertragungsglied des Wischergestänges anbringbar ist, und einer Durchgangsöffnung, in die eine Antriebswelle einsteckbar ist, aufweist, mit folgenden Schritten:
- die Antriebswelle wird in die Durchgangsöffnungen der Koppelteile eingebracht,
- zur gegenseitigen Ausrichtung der Verbindungsstellen werden die Koppelteile um die Längsmittelachse der Antriebswelle geschwenkt,
- anschließend werden die Koppelteile und die Antriebswelle drehfest miteinander gekoppelt.

12. Verfahren nach Anspruch 11, **dadurch gekennzeichnet, dass** die Koppelteile und die Antriebswelle kraftschlüssig, stoffschlüssig und/oder formschlüssig miteinander verbunden werden.

## Claims

1. Rod assembly of windscreen wipers, said assembly pertaining to a windscreen wiper system for vehicles, the rod assembly of windscreen wipers having at least one coupling element (1) which has at least two connecting points (13, 17) which are arranged at a distance from each other and at which at least one transmission element (63, 65; 71) of the rod assembly of windscreen wipers can be attached in each case, and the coupling element (1) being pivotable about a longitudinal central axis (9) of a spindle (7), **characterized in that** the coupling element (1) is of multipart design and has at least a first coupling part (3) and a second coupling part (5) on which in each case at least one of the connecting points (13; 17) is provided, with the connecting points (13; 17) being aligned with respect to each other, in order to set a desired distance between them during or before the coupling parts (3, 5) are connected.

2. Rod assembly of windscreen wipers according to Claim 1, **characterized in that** the first and second coupling parts (3, 5) each have at least one passage opening (25, 27) into which the spindle (7) can be inserted.

3. Rod assembly of windscreen wipers according to one of the preceding claims, **characterized in that** the coupling parts (3, 5) are arranged one above the other and bear against each other at least in some regions.

4. Rod assembly of windscreen wipers according to one of the preceding claims, **characterized in that** the first and second coupling parts (3, 5) and the spindle (7) can be coupled to one another frictionally, with a cohesive material joint and/or in a form-fitting manner.

5. Rod assembly of windscreen wipers according to one of the preceding claims, **characterized in that** the spindle (7) can be acted upon by a torque.

6. Rod assembly of windscreen wipers according to one of the preceding claims, **characterized in that** the longitudinal section (29) of the spindle (7), which longitudinal section is arranged in the passage openings (25, 27) of the coupling parts (3, 5), is provided with a knurling (31), the diameter of the passage openings (25, 27) being smaller than the diameter of the spindle (7) in the region of the knurling (31).

7. Rod assembly of windscreen wipers according to one of the preceding claims, **characterized in that** the coupling parts (3, 5) are secured on the spindle (7) against displacement in the axial direction by means of in each case at least one caulking, preferably an annular caulking (37, 43) surrounding the particular passage opening.

8. Rod assembly of windscreen wipers according to one of the preceding claims, **characterized in that** the spindle (7) is provided with a polyhedral (51) which can be inserted into the passage openings (25, 27) which are correspondingly matched in order to form a form-fitting connection.

9. Rod assembly of windscreen wipers according to Claim 8, **characterized in that** the spindle (7) has, in order to axially secure the coupling parts (3, 5), an annular shoulder (49) against which the first coupling part (3) bears, the second coupling part (5), which bears against the first coupling part (3) being provided with a caulking on its side facing away from the first coupling part (3).

10. Rod assembly of windscreen wipers according to one of the preceding claims, **characterized in that** the coupling parts are connected in a rotationally fixed manner to a sleeve (73) inserted into their particular passage opening, the sleeve (73) being designed in a manner such that it can be plugged onto the spindle.

11. Method for producing a coupling element of a rod assembly of windscreen wipers, said assembly pertaining to a windscreen wiper system for vehicles, the coupling element having at least two coupling parts with in each case at least one connecting point at which at least one transmission element of the rod assembly of windscreen wipers can be attached, and a passage opening into which a driveshaft can be inserted, with the following steps:
- the driveshaft is placed into the passage openings of the coupling parts,
- for mutual alignment of the connecting points, the coupling parts are pivoted about the longitudinal central axis of the drive shaft,
- the coupling parts and the drive shaft are then coupled to one another in a rotationally fixed manner.

12. Method according to Claim 11, **characterized in that** the coupling parts and the drive shaft are connected to one another frictionally, with a cohesive material joint and/or in a form-fitting manner.

## Revendications

1. Tringlerie de système d'essuie-glace de véhicule comprenant un élément de couplage (1) ayant au moins deux points de liaison (13, 17) écartés l'un de l'autre et dont chacun de ces points de liaison comporte au moins un élément de transmission (63, 65, 71) de la tringlerie,
l'élément de couplage (1) pivotant autour de l'axe longitudinal médian (9) d'un axe (7),
**caractérisée en ce que**
l'élément de couplage (1) est réalisé en plusieurs parties et comporte au moins une première pièce de couplage (3) et une seconde pièce de couplage (5) munies chaque fois d'au moins un point de liaison (13, 17), et pour régler l'écartement souhaité des points de liaison (13, 17) on aligne les pièces de couplage (3, 5) au moment ou avant de les relier.

2. Tringlerie de système d'essuie-glace selon la revendication 1,
**caractérisée en ce que**
la première et la seconde pièce de couplage (3, 5) comportent chacune au moins un orifice traversant (25, 27) recevant l'axe (7).

3. Tringlerie de système d'essuie-glace selon l'une quelconque des revendications précédentes,
**caractérisée en ce que**
les pièces de couplage (3, 5) sont placées l'une sur l'autre et s'appliquent l'une contre l'autre au moins par zone.

4. Tringlerie de système d'essuie-glace selon l'une quelconque des revendications précédentes,
**caractérisée en ce que**
la première et la seconde pièce de couplage (3, 5) et l'axe (7) sont reliés par une liaison de force, une liaison de matière et/ou une liaison de forme.

5. Tringlerie de système d'essuie-glace selon l'une quelconque des revendications précédentes,
**caractérisée en ce que**
l'axe (7) est soumis à un couple.

6. Tringlerie de système d'essuie-glace selon l'une quelconque des revendications précédentes,
**caractérisée en ce que**
le segment longitudinal (29) de l'axe (7) engagé dans les orifices traversant (25, 27) des pièces de couplage (3, 5) comporte un moletage (31), le diamètre des orifices traversant (25, 27) étant inférieur au diamètre de l'axe (7) au niveau du moletage (31).

7. Tringlerie de système d'essuie-glace selon l'une quelconque des revendications précédentes,
**caractérisée en ce que**
les pièces de couplage (3, 5) sont bloquées sur l'axe (7) en coulissement dans la direction axiale à l'aide d'au moins un matage, de préférence un sertissage périphérique (37, 43) entourant l'orifice de passage respectif.

8. Tringlerie de système d'essuie-glace selon l'une quelconque des revendications précédentes,
**caractérisée en ce que**
l'axe (7) comporte une zone à pans multiples (51) qui s'engagent dans des orifices traversant (25, 27) adaptés à la forme de la liaison de forme.

9. Tringlerie de système d'essuie-glace selon la revendication 8,
**caractérisée en ce que**
pour le blocage axial des pièces de couplage (3, 5), l'axe (7) comporte un épaulement annulaire (49) contre lequel vient la première pièce de couplage (3), et
le côté de la seconde pièce de couplage (3) appliqué contre la première pièce (3) et non tourné vers la première pièce de couplage (3) est munie d'un matage.

10. Tringlerie de système d'essuie-glace selon l'une quelconque des revendications précédentes,
**caractérisée en ce que**
les pièces de couplage sont reliées solidairement en rotation à un manchon (73) engagé dans l'orifice de passage respectif,
le manchon (73) pouvant s'engager sur l'axe.

11. Procédé de fabrication d'un élément de couplage d'une tringlerie d'un système d'essuie-glace de véhicule automobile, selon lequel l'élément de couplage comporte au moins deux pièces de couplage avec chaque fois au moins un point de liaison auquel est prévu au moins un élément de transmission de la tringlerie et un orifice traversant dans lequel s'engage l'axe d'entraînement, comprenant les étapes suivantes :
- on introduit l'axe d'entraînement dans les orifices traversants des pièces de couplage,
- pour l'alignement réciproque des points de liaison on bascule les pièces de couplage autour de l'axe géométrique central longitudinal de l'axe d'entraînement,
- ensuite on couple les pièces de couplage et l'axe d'entraînement d'une manière solidaire en rotation.

12. Procédé selon la revendication 11,
**caractérisé en ce qu'**
on relie les pièces de couplage et l'axe d'entraînement par une liaison par la force, une liaison par la matière et/ou une liaison par la forme.
